# EUROPEAN PATENT APPLICATION

(11) **EP 1 013 238 A2**
(43) Date of publication of application: **28.06.2000**
(21) Application number: 99124862.6
(22) Date of filing: 15.12.1999
(51) Int. Cl.: A61C 17/26

(54) **Toothbrush with means for correct oral hygiene**

(30) Priority: 23.12.1998 IT MI982814
(71) Applicant: Guidi, Gianmaria, 25134 Brescia (IT)
(72) Inventor: Guidi, Gianmaria, 25134 Brescia (IT)
(74) Representative: Modiano, Guido, Dr.-Ing.

(57) **Abstract**

A toothbrush (1) with means for correct oral hygiene, comprising a handle element (2) with which it is possible to associate an axially elongated brush body (3) for dental cleaning. Means (10,11) for turning the brush body about the axis of the brush body in a presettable direction of rotation are also provided.

## Description

The present invention relates to a toothbrush with means for correct oral hygiene.

It is known that dentists recommend, for correct oral hygiene, to use the ordinary toothbrush in a vertical direction, since by using it horizontally one would damage the gums, which would tend to shrink, and one would also be unable to reach the external points of the dental arch to be cleaned.

The toothbrush must be used with a downward movement for the upper dental arch and with an upward movement for the lower arch, so as to avoid irritating the gums while achieving excellent cleaning.

Although this operation is apparently simple, it is hardly ever performed correctly when carried out manually, since it is long and tedious and also requires a certain degree of manual skill.

In order to solve this problem, motorized toothbrushes have already been introduced which in practice force the head that supports the bristles to perform a downward oscillating motion, which however has failed to prove to be valid, since the oscillating motion does not allow to set the motion differently for the upper arch and for the lower arch and accordingly the gums can be damaged.

The aim of the invention is to eliminate the above mentioned drawbacks, by providing a toothbrush with means for correct oral hygiene which allows to provide the correct motion both for the upper arch and for the lower arch without thereby requiring manual skill on the part of the user.

Within the scope of this aim, a particular object of the invention is to provide a toothbrush which allows to provide faster teeth cleaning operations and also significantly improves theft effectiveness.

Another object of the present invention is to provide a toothbrush with means for correct oral hygiene which thanks to its particular constructive characteristics is capable of giving the greatest assurances of reliability and safety in use.

Another object of the present invention is to provide a toothbrush which can be easily obtained starting from commonly commercially available elements and materials and is also competitive from a purely economical point of view.

This aim, these objects and others which will become apparent hereinafter are achieved by a toothbrush with means for correct oral hygiene, characterized in that it comprises a handle element with which an axially elongated brush body for dental cleaning is associated, means for turning said brush body about the axis of said brush body being further provided.

Further characteristics and advantages of the present invention will become apparent from the following detailed description of some preferred but not exclusive embodiments of a toothbrush with means for correct oral hygiene, illustrated only by way of non-limitative example in the accompanying drawings, wherein:
Figure 1 is an exploded perspective view of the toothbrush according to the present invention;
Figure 2 is a longitudinal sectional view of the toothbrush;
Figure 3 is a side view of the toothbrush;
Figure 4 is a sectional view of the toothbrush with built-in motor;
Figure 5 is a side view of the toothbrush with built-in motor;
Figure 6 is a view of a different embodiment of the brush body;
Figure 7 is a view of a further embodiment of the toothbrush with a head provided with nozzles;
Figure 8 is a view of the head with the brush body removed;
Figure 9 is a longitudinal sectional view of the body of the toothbrush, illustrating the water feed duct;
Figure 10 is a view of the spray nozzles on the head;
Figure 11 is a sectional view, taken along the line XI-XI of Figure 9.

With reference to the above figures, the toothbrush with means for correct oral hygiene, generally designated by the reference numeral 1, comprises a handle element 2 which, in the specific embodiment, is shaped like an elongated cylinder.

An axially elongated brush body, generally designated by the reference numeral 3, is connected to the handle 2.

The particularity of the invention consists in that means for turning the brush body 3 about its own axis are provided.

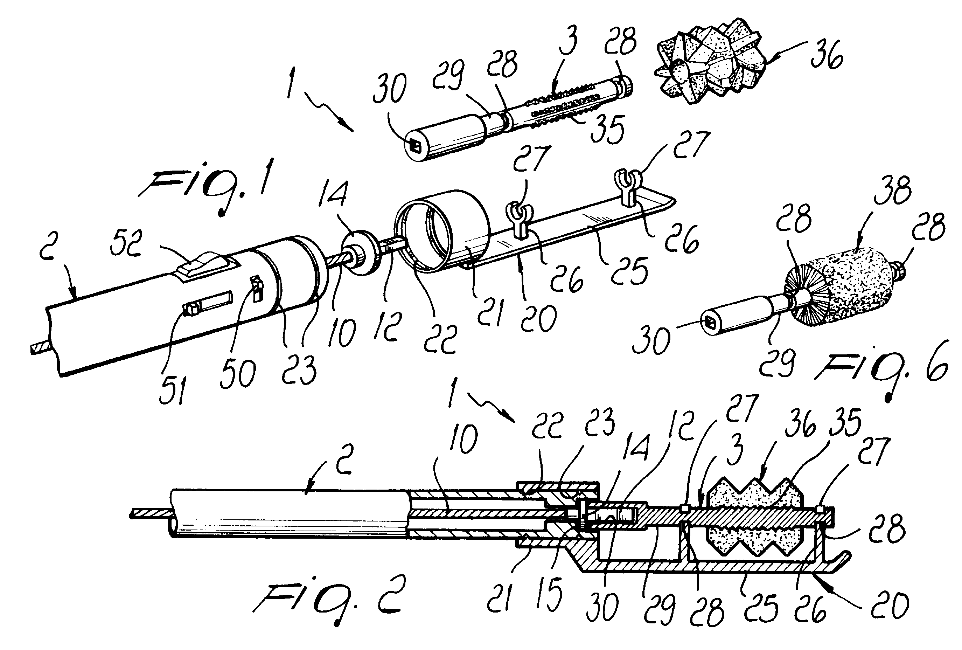

According to what is shown in Figures 1 to 3, the means for turning the brush body are constituted by a flexible cable 10 which runs axially inside the handle 2 and is operatively connected to a separate motor assembly 11 which typically can be connected to the electric mains.

At the other end, the rotating flexible cable 10 ends with a polygonal and preferably square coupling 12, whose function is to transmit the rotation to the brush body 3, as will become apparent hereinafter.

At the polygonal end 12 a retainer 14 is provided which acts as an axial thrust bearing and engages an abutment 15 formed by the handle element.

A tip 20 can be coupled by snap action to the handle element 2 and is constituted by a collar 21 with an annular coupling tooth 22 which engages in corresponding grooves 23 formed in the handle element.

There are two grooves 23 which are spaced one another so as to allow to perform mechanical coupling or uncoupling, depending on which groove is engaged by the tooth 22.

The tip 20 has a protective flap 25 from which there extend arms 26 which end with a fork 27 and allow snap coupling in grooves 28 formed in the shaft 29 of the brush body 3.

The shaft 29 defines, at one of its ends, a seat 30 which is shaped complementarily to the coupling element 12 for rotationally mating with said coupling.

Furthermore, rough portions or protrusions, designated by the reference numeral 35, are provided between the two grooves 28 and allow to rotationally rigidly couple a brush 36 which is preferably cylindrical and can be made of foamed material with raised contours or with elements with interposed and superimposed disks made of latex and foamed material, so as to form protrusions which produce the cleaning action when they engage the teeth.

It is optionally also possible to provide a brush 38 of the type with bristles, which preferably is in any case soft.

The flap 25 is arranged so as to cover the surface of the brush at least along a circumferential portion, so that it provides a protective element for the cheek and tongue during the operation of the toothbrush.

As shown in Figures 4 and 5, the handle element 2 can be of the type internally provided with a motor 40 which is powered by an internal battery 41 which can be recharged on an adapted base.

On the handle element 2 there is advantageously a button 50 which allows to set the direction of rotation of the brush body, so that it is possible to perform a different treatment for the upper dental arch and for the lower dental arch, so as to always have a movement which is directed from the base of the tooth toward the free end of the tooth, thus avoiding irritating the gums unnecessarily.

There is also a speed regulator, designated by the reference numeral 51, and an on-off switch, designated by the reference numeral 52.

The control elements can be equally provided on the handle element or optionally on the motor base, if the motor base is provided.

The brush body can be easily coupled by snap action to the tip 20, so that it is possible to replace it rapidly and easily when it is worn or when it is necessary to change the type of brush according to the different practical requirements.

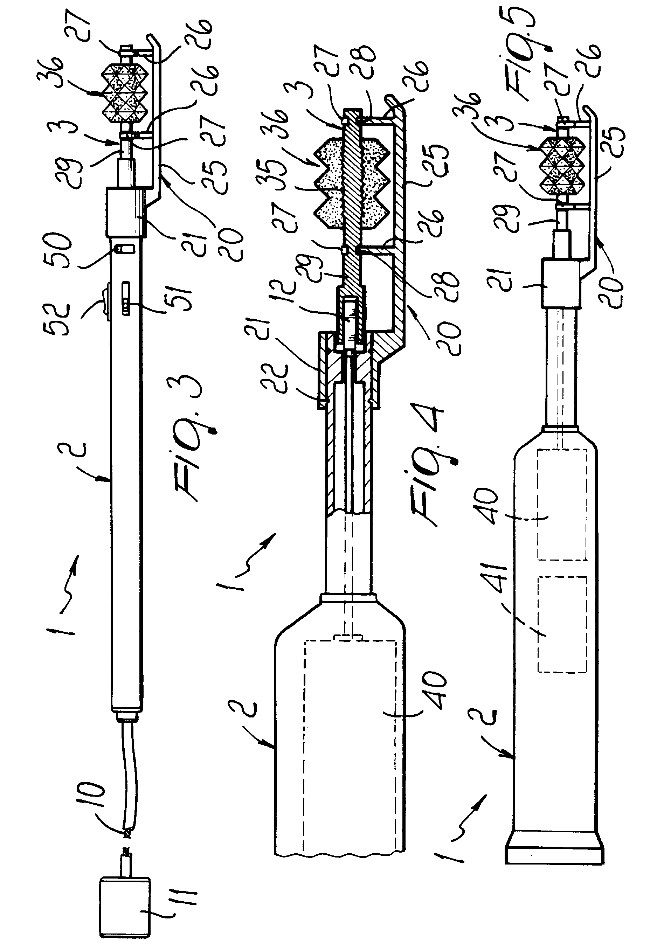

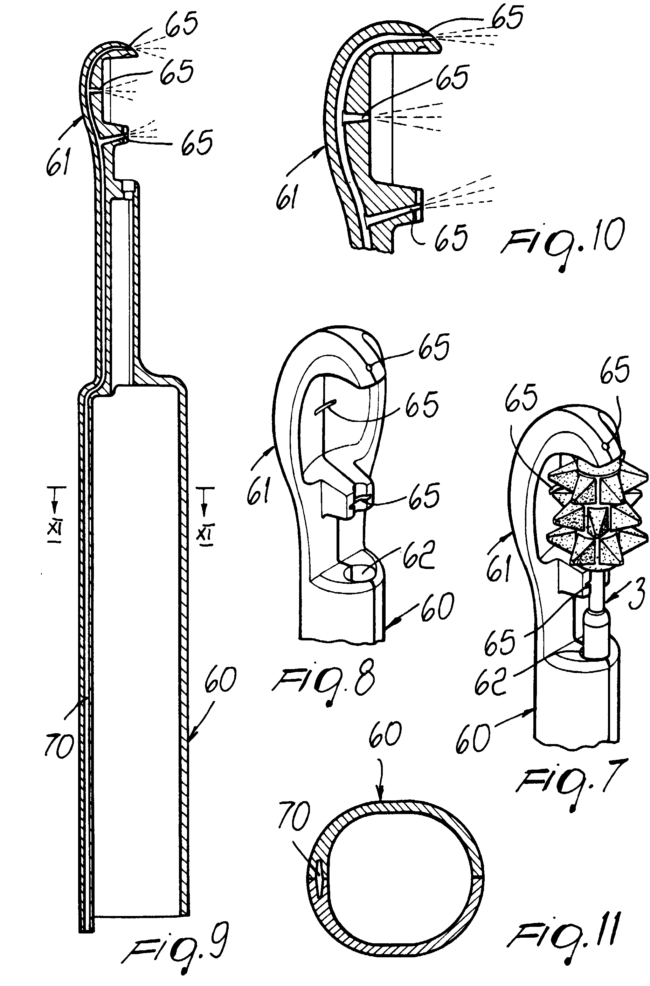

As shown in Figures 7 to 11, the toothbrush can be provided with spray nozzles, and for this purpose provision is made for a toothbrush with a body 60 which ends with a head 61 which forms a recess 62 for the mating of a brush body, again designated by the reference numeral 3.

By removing the brush body 3 it is possible to access spray nozzles 65, which are preferably directed so as to converge and so as to correctly affect the dental arch.

The spray nozzles are connected to a water feed duct 70 which is formed directly in the body 60 of the toothbrush.

From the above description it is evident that the invention achieves the intended aim and objects, and in particular the fact is stressed that the provision of a toothbrush in which the cleaning body has a substantially cylindrical shape which allows to turn it continuously allows to have an extremely effective cleaning action even in the less accessible interstices of the dental arch; another very important aspect is that the cleaning action can always be performed correctly, since it is possible to set the direction of rotation of the brush body.

The invention thus conceived is susceptible of numerous modifications and variations, all of which are within the scope of the inventive concept.

All the details may also be replaced with other technically equivalent elements.

In practice, the materials employed, as well as the contingent shapes and the dimensions, may be any according to requirements.

The disclosures in Italian Patent Application No. MI98A002814 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A toothbrush with means for correct oral hygiene, characterized in that it comprises a handle element with which an axially elongated brush body for dental cleaning is associated, means for turning said brush body about the axis of said brush body being also provided.

2. The toothbrush according to claim 1, characterized in that said means for turning the brush body comprise a flexible cable which runs axially and rotatably inside said handle and is operatively connected to an external motor assembly.

3. The toothbrush according to claim 2, characterized in that said flexible cable has, at one end, a polygonal coupling which can be detachably engaged with a complementarily shaped seat formed by said brush body.

4. The toothbrush according to claim 3, characterized in that it comprises, at said polygonal coupling, a retainer adapted to act as an axial thrust bearing which engages an abutment formed by said handle element.

5. The toothbrush according to claim 1, characterized in that it comprises a terminal which can be mated by snap action to said handle and has a collar with an annular mating tooth which can be detachably inserted in a groove formed in said handle element.

6. The toothbrush according to claim 5, characterized in that said handle element has two grooves spaced one another, the mechanical mating of said coupling being performed when said annular tooth is in one of said grooves, said coupling being disengaged from the seat formed in said brush body when said annular tooth is inserted in the other one of said grooves.

7. The toothbrush according to claim 5, characterized in that said terminal forms a protective flap from which arms protrude which end with a fork-like element for detachable mating in grooves formed in the shaft of said brush body.

8. The toothbrush according to one or more of the preceding claims, characterized in that said shaft has, between said grooves, rough portions or protrusions in order to rotationally rigidly couple a brush which is rigidly associated with said shaft.

9. The toothbrush according to one or more of the preceding claims, characterized in that said brush has a substantially cylindrical shape.

10. The toothbrush according to one or more of the preceding claims, characterized in that said brush is constituted by variously shaped soft foamed elements made of plastics.

11. The toothbrush according to one or more of the preceding claims, characterized in that said brush is constituted by a plurality of substantially soft bristles.

12. The toothbrush according to one or more of the preceding claims, characterized in that it comprises, inside said handle element, a motor which is powered by an internal battery, said motor driving a polygonal coupling for mating with said brush body.

13. The toothbrush according to one or more of the preceding claims, characterized in that it comprises means for actuating the rotation of said brush in mutually opposite directions of rotation.

14. The toothbrush according to one or more of the preceding claims, characterized in that it comprises at least one spray nozzle formed by said handle element.

15. The toothbrush according to one or more of the preceding claims, characterized in that it comprises a plurality of said spray nozzles which mutually converge.

16. The toothbrush according to one or more of the preceding claims, characterized in that it comprises a duct for feeding water to said spray nozzles, said duct being formed on the body of said toothbrush.

17. The toothbrush according to one or more of the preceding claims, characterized in that it comprises a button for operating said brush body in one direction of rotation or in the opposite direction, a speed adjustment element and a power-on switch.
